# FASCICULE DE BREVET EUROPEEN

(11) **EP 0 650 864 B1**
(45) Date de publication et mention de la délivrance du brevet: **06.11.1996**
(21) Numéro de dépôt: 94401901.7
(22) Date de dépôt: 25.08.1994
(51) Int. Cl.: B60N 2/30

(54) **Ensemble de siège de véhicule à siège d'enfant intégré**
Fahrzeugsitzeinheit mit integriertem Kindersitz
Vehicle seat assembly with integrated child seat

(30) Priorité: 28.10.1993 FR 9312879
(43) Date de publication de la demande: 03.05.1995
(73) Titulaire: AUTOMOBILES PEUGEOT, 75116 Paris (FR); AUTOMOBILES CITROEN, 92200 Neuilly-sur-Seine (FR)
(72) Inventeur: Louismet, Jacques, F-92400 Courbevoie (FR)
(74) Mandataire: Bouget, Lucien

(56) Documents cités:
- EP-A- 0 258 194
- EP-A- 0 286 542
- EP-A- 0 518 726
- EP-A- 0 556 511
- WO-A-92/03306
- FR-A- 2 664 215
- FR-A- 2 692 209
- US-A- 4 768 827

## Description

L'invention concerne un siège pour véhicule automobile comportant une réhausse permettant d'adapter le siège pour son usage par un enfant.

Les réglementations actuellement en vigueur nécessitent que les enfants soient maintenus par une ceinture de sécurité lorsqu'ils sont transportés dans un véhicule automobile.

Dans le cas des jeunes enfants voyageant assis dans un véhicule automobile et en particulier dans le cas des enfants ayant entre trois et dix ans, il est nécessaire de prévoir des sièges spécialement adaptés pour permettre aux enfants de voyager dans une position confortable et dans de bonnes conditions de sécurité.

Dans la mesure où les sièges de passagers d'un véhicule automobile doivent pouvoir être utilisés successivement par des adultes et par des enfants, on a proposé des moyens d'adaptation de ces sièges tels que des réhausses qui permettent de transformer le siège pour adulte en un siège pour enfant.

On connaît par exemple des réhausses destinées à constituer l'assise du siège pour enfant qui sont vendues dans des magasins d'accessoires pour véhicule automobile et qui peuvent être fixées sur un siège de véhicule pour surélever l'enfant en position assise, de manière à adapter le trajet de la sangle de la ceinture de sécurité associée au siège de véhicule à la morphologie de l'enfant et en particulier pour éviter des frottements de la sangle sur le cou de l'enfant.

Les réhausseurs vendus séparément du véhicule qui sont destinés à être posés et fixés sur la banquette arrière ont l'inconvénient de présenter un encombrement en largeur limitant le nombre de passagers pouvant voyager sur la banquette arrière.

En outre, le stockage de ces réhausseurs prend une place importante à l'intérieur du véhicule, par exemple dans le coffre, lorsqu'ils ne sont pas employés. Enfin, dans le cas où le montage du réhausseur est réalisé de manière défectueuse, la retenue de l'enfant en cas de choc risque de ne plus être assurée de manière satisfaisante, si bien que les conditions de sécurité du transport de l'enfant ne sont pas obtenues de manière sûre.

On a proposé par exemple dans le EP-A-0 518 726 (correspondant au préambule de la revendication indépendante), des réhausseurs intégrés à un siège de véhicule et généralement à la banquette arrière du véhicule qui sont mobiles entre une position abaissée, dans laquelle ils constituent une partie de l'assise du siège de véhicule dans sa configuration d'utilisation par un adulte et une position relevée et reculée vers le dossier du siège de véhicule, dans laquelle ils constituent l'assise d'un siège pour enfant.

De telles réhausses comportent généralement une garniture portée par un support rigide qui est monté pivotant sur le soubassement du siège de véhicule par l'intermédiaire d'un ensemble articulé comportant généralement deux paires de bielles parallèles entre elles pour constituer une structure en parallélogramme.

De tels dispositifs sont complexes et ne permettent pas d'obtenir un très bon confort du siège, lorsque celui-ci est utilisé par un adulte et un très bon confort et une grande sécurité, lorsqu'il est utilisé par un enfant. En particulier, l'enfant peut être amené à réaliser le déverrouillage de la réhausse en position relevée, de manière accidentelle.

Le but de l'invention est donc de proposer un siège pour véhicule automobile constitué d'une assise reposant sur un soubassement et d'un dossier et comportant une réhausse permettant d'adapter le siège pour son usage par un enfant et comprenant une garniture, un support rigide monté articulé par l'intermédiaire de bielles sur le soubassement, et un moyen de blocage des bielles par rapport au soubassement disposé à un niveau inférieur au niveau de l'assise, de manière qu'on puisse déplacer manuellement la réhausse entre une position abaissée dans laquelle la réhausse constitue une partie de l'assise du siège dans sa configuration d'utilisation par un adulte et une position relevée et reculée vers le dossier, dans laquelle la réhausse est bloquée et constitue l'assise du siège dans sa configuration d'utilisation par un enfant, l'assise ayant une partie fixe délimitant une cavité, au-dessus du soubassement, au moins dans la partie centrale et antérieure du siège, de manière à servir de logement à la réhausse, ce siège de véhicule automobile présentant un très bon confort aussi bien dans sa configuration d'utilisation par un adulte que dans sa configuration d'utilisation par un enfant et assurant de très bonnes conditions de sécurité lorsqu'il est utilisé par un enfant, tout en étant d'une structure simple et d'un encombrement faible.

Dans ce but, la réhausse est montée mobile sur le soubassement par l'intermédiaire de deux bielles uniquement qui sont articulées à l'une de leurs extrémités sur le soubassement et à leur autre extrémité sur le support de la réhausse, autour d'un axe de direction transversale situé au voisinage de l'extrémité antérieure de la réhausse, entre ladite position abaissée à l'intérieur de la cavité et ladite position relevée et reculée, dans laquelle la réhausse repose sur la partie fixe de l'assise, dans une position adjacente au dossier,
et le moyen de blocage des bielles est associé à un moyen de commande et de verrouillage disposé en-dessous de la partie fixe de l'assise et à l'avant de l'assise.

Afin de bien faire comprendre l'invention, on va maintenant décrire, à titre d'exemple non limitatif, en se référant aux figures jointes en annexe, un siège de véhicule automobile suivant l'invention.

La figure 1 est une vue en perspective d'un siège de véhicule suivant l'invention dans sa configuration d'utilisation par un adulte.

La figure 2 est une vue en perspective du siège de véhicule automobile, dans sa configuration d'utilisation par un enfant.

La figure 3 est une vue en coupe longitudinale partielle du siège représenté sur les figures 1 et 2, dans sa configuration d'utilisation par un enfant.

La figure 4 est une vue en perspective d'une partie du dispositif de commande et de verrouillage de la réhausse mobile du siège de véhicule automobile.

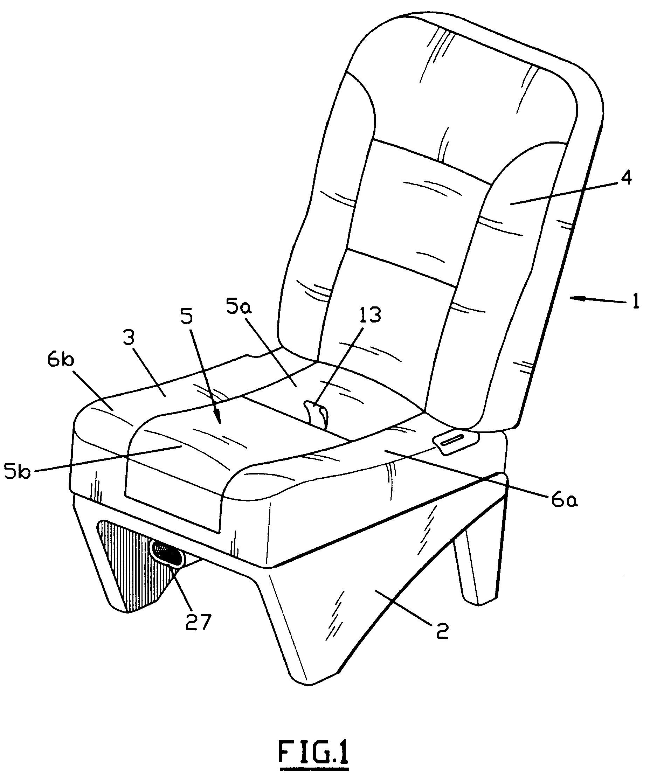

Sur la figure 1, on voit un siège de véhicule automobile désigné de manière générale par le repère 1 qui comporte un soubassement 2 en matière rigide destiné à être fixé sur le plancher du véhicule automobile, une assise 3 reposant sur le soubassement 2 et un dossier 4 qui peut être par exemple un dossier à inclinaison réglable.

L'assise 3 du siège 1 comporte une partie centrale ou médaillon 5 et deux parties latérales 6a et 6b.

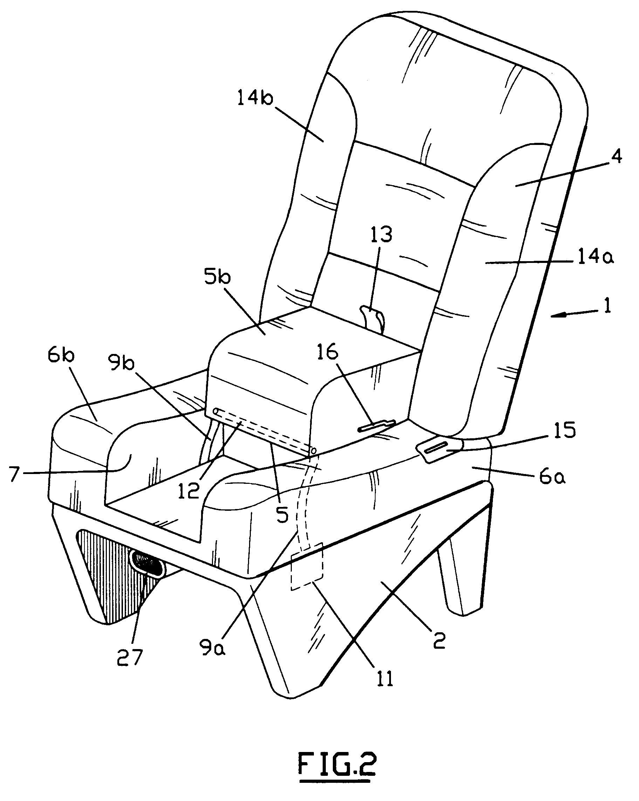

La partie centrale 5 de l'assise 3 comporte, entre les parties latérales 6a et 6b, une partie fixe 5a adjacente au dossier 4 et une partie mobile 5b constituant la réhausse qui peut être mise en place en position relevée pour constituer l'assise d'un siège pour enfant, comme représenté sur la figure 2.

La partie fixe de l'assise 3 constituée par les deux parties latérales 6a et 6b et par la partie 5a du médaillon adjacente au dossier 4 délimite une cavité 7 à la partie centrale et antérieure du siège 1, comme il est visible sur la figure 2.

La réhausse 5b vient se loger dans la cavité 7, lorsque le siège est mis dans sa configuration d'utilisation par un adulte.

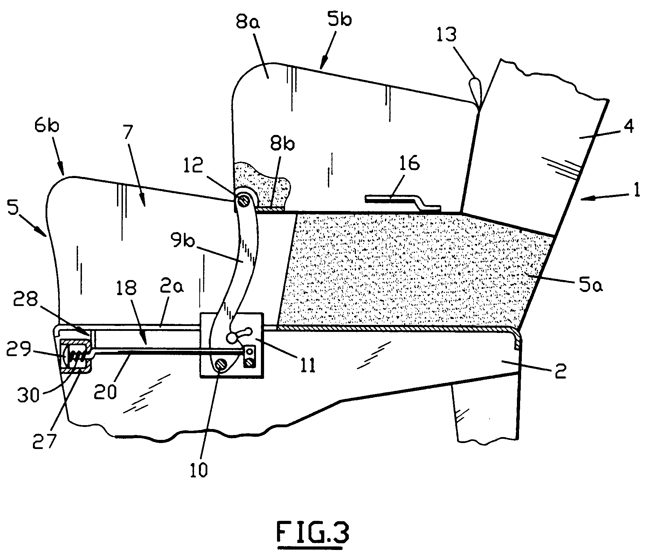

Comme il est visible sur la figure 3, la réhausse 5b comporte une garniture en matériau souple 8a, par exemple en mousse revêtue de tissu, fixée sur une plaque de support rigide 8b qui peut être par exemple en matière plastique.

L'assise 5b est montée mobile, au-dessus du soubassement 2 du siège de véhicule, par l'intermédiaire de deux bielles 9a et 9b qui sont visibles sur la figure 2.

Les bielles 9a et 9b sont fixées à l'une de leurs extrémités sur un axe horizontal 10 monté rotatif entre deux flasques 11 fixés dans une disposition verticale sur le soubassement 2, de chaque côté de l'assise 5.

Les deux bielles 9a et 9b sont montées dans des dispositions parallèles, entre les deux flasques 11 solidaires du soubassement 2, de manière que leur axe d'articulation soit disposé suivant une direction transversale du siège 1.

Les bielles 9a et 9b sont articulées à leur extrémité opposée aux flasques d'articulation 11, sur la partie antérieure du support rigide 8b de la réhausse 5b, de manière que les axes d'articulation des bielles 9a et 9b soient alignés suivant un axe 12 transversal par rapport au siège 1 à la partie antérieure de la réhausse 5b constituant la partie antérieure du siège 1, dans sa configuration d'utilisation par un adulte.

La réhausse 5b reliée au soubassement 2 par l'intermédiaire des bielles 9a et 9b peut être déplacée entre une première position abaissée, à l'intérieur de la cavité 7 (figure 1) et une seconde position relevée et reculée dans laquelle l'assise 5b vient reposer par l'intermédiaire de la plaque de support rigide 8b, sur la partie fixe 5a de l'assise 5 (figures 2 et 3).

Le déplacement de la réhausse 5b entre sa première et sa seconde positions peut être réalisé manuellement, par un utilisateur, grâce à une dragonne 13 fixée à l'arrière de la réhausse 5b qui est accessible pour les doigts de l'utilisateur aussi bien dans la position de la réhausse dans la configuration d'utilisation du siège par un adulte que dans la position de la réhausse dans la configuration d'utilisation du siège par un enfant. La dragonne 13 peut être par exemple cousue sur le tissu recouvrant le garnissage 8a de la rehausse.

Lorsque la réhausse 5b est dans sa position correspondant à la configuration d'utilisation du siège par un adulte, comme représenté sur la figure 1, l'utilisateur saisit la dragonne 13 et soulève la réhausse 5b qui pivote autour de l'axe 12 autour duquel sont articulées les bielles 9a et 9b à la partie antérieure de la réhausse. On peut ainsi dégager la réhausse de la cavité 7 puis par traction vers l'arrière du siège 1, placer la réhausse 5b dans sa position relevée et reculée représentée sur les figures 2 et 3. La réhausse 5b vient alors reposer sur la partie fixe 5a du médaillon central du siège adjacente au dossier 4.

Le siège de véhicule 1, dans sa configuration représentée sur la figure 2, peut être utilisé par un enfant, la réhausse 5b dans sa position relevée constituant l'assise du siège dont le dossier est constitué par le dossier 4 qui peut comporter par exemple deux bourrelets latéraux 14a et 14b en saillie vers l'avant du siège et assurant une retenue de l'enfant.

La sécurité de l'enfant est assurée par la ceinture du siège dont la boucle peut être engagée dans le puits de fixation 15 de la ceinture, dans une position latérale.

Le brin supérieur de la sangle de la ceinture de sécurité vient se placer dans une position satisfaisante le long de la poitrine de l'enfant, du fait de la position surélevée de l'assise 5b. Le brin inférieur de la ceinture de sécurité peut être guidé par une tige de guidage latérale 16 fixée sur le côté de la réhausse 5b, de manière à être plaquée sur les cuisses de l'enfant et à assurer son maintien sans risque de pression excessive au niveau de l'abdomen de l'enfant, en cas de choc.

Les tiges latérales 16 sont recourbées et présentent une ouverture vers l'avant du siège permettant d'engager la sangle de la ceinture de sécurité.

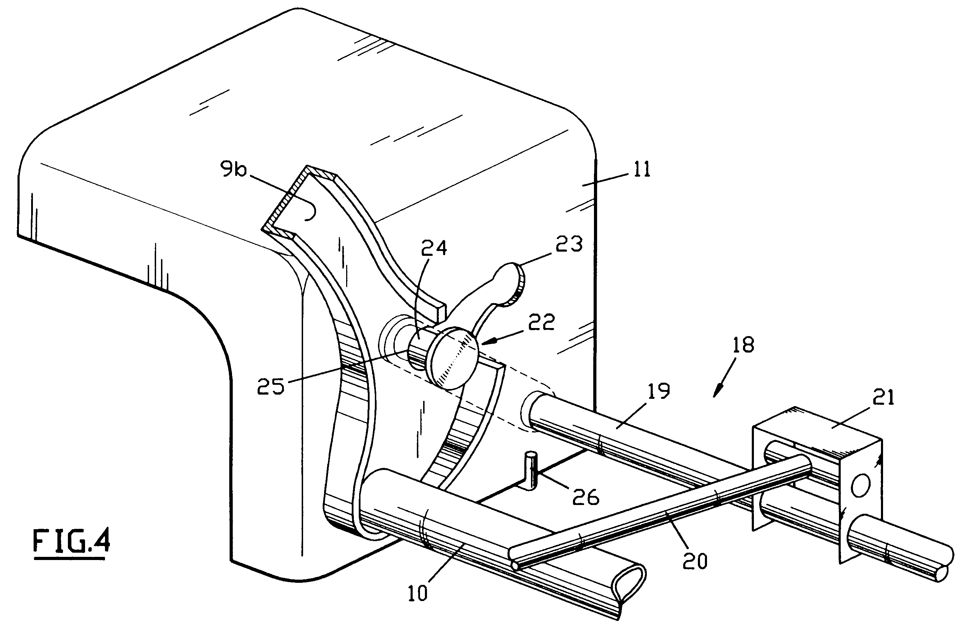

Sur les figures 3 et 4, on a représenté le dispositif de commande et de verrouillage d'une bielle d'articulation de la réhausse, désigné de manière générale par le repère 18.

Le dispositif 18 comporte un ensemble d'actionnement commun aux deux bielles 9a et 9b constitué par un axe 19 de direction transversale par rapport au siège 1 monté rotatif dans des ouvertures traversant les flasques latéraux 11, une tige de poussée 20 et une bielle de transmission 21 dans laquelle est engagée et montée articulée la partie d'extrémité de la tige de poussée 20 constituant un axe de liaison perpendiculaire à la tige de poussée 20 et parallèle à l'axe 19. L'axe 19 est lui-même solidaire de la bielle 21, de manière que le déplacement axial de la tige de poussée 20 dans un sens ou dans l'autre assure la mise en rotation de l'axe 19.

Le dispositif de commande et de verrouillage 18 comporte de plus, pour chacune des bielles 9a et 9b, un levier 22 solidaire de l'axe 19 à l'une de ses extrémités et portant un pion de verrouillage 24 à sa seconde extrémité.

Chacun des leviers tels que 22 est disposé vers l'extérieur du flasque 11 qui est traversé par une ouverture 23 en forme de secteur annulaire ayant une partie circulaire à l'une de ses extrémités dans laquelle est engagé un pion 24.

La partie en forme de secteur annulaire des ouvertures 23 est coaxiale à l'axe 19, de sorte que, lors de la mise en rotation de l'axe 19, le pion 24 solidaire du levier 22 se déplace à l'intérieur de l'ouverture 23 entre une position de verrouillage représentée sur la figure 4 et une position déverrouillée dans laquelle le pion 24 se trouve au niveau de l'extrémité circulaire de l'ouverture 23.

Les bielles telles que 9b (figure 4) ont une forme profilée creuse et présentent un logement 25 sur un bord latéral dirigé vers le pion de verrouillage 24 solidaire du levier 22. Le pion 24 comporte une partie cylindrique à petit diamètre qui peut venir s'engager dans le logement 25 et une partie d'extrémité à grand diamètre assurant le maintien du pion 24 dans l'ouverture 23 traversant le flasque 11.

Un ressort spiral 26 comporte une première partie d'extrémité qui est fixée sur un bord inférieur d'un flasque 11 et une seconde partie d'extrémité fixée sur un pion 24, de manière à assurer le rappel élastique du pion 24 vers l'extrémité de l'ouverture 23 venant en coïncidence avec le logement 25 de la bielle correspondante, dans la position verticale de la bielle telle que représentée sur les figures 3 et 4, après mise en position relevée de la réhausse 5b.

Les bielles telles que 9b qui sont montées pivotantes sur les flasques 11 solidaires du soubassement 2, par l'intermédiaire de l'axe 10 viennent s'engager sur les pions 24, par l'intermédiaire de leur logement 25 en fin de déplacement de l'assise 5b vers le haut et vers l'arrière. Lorsque les pions 24 sont engagés dans les logements 25 des bielles, celles-ci ne peuvent tourner ni dans un sens ni dans l'autre, du fait que les pions 24 sont engagés pratiquement sans jeu dans l'ouverture 23 et que les bielles montées rotatives autour de l'axe 10 viennent en butée sur les pions 24.

Dans sa position relevée et reculée, comme représenté sur les figures 2 et 3, la réhausse 5b est parfaitement maintenue en position, du fait qu'elle repose par sa partie postérieure sur l'assise 5a et par sa partie antérieure sur les bielles 9a et 9b qui sont bloquées par les pions 24.

D'autre part, la cavité 7 qui est libérée par la rehausse 5b dans sa position relevée constitue un espace de dégagement pouvant recevoir les pieds de l'enfant. On évite ainsi un contact des pieds de l'enfant avec l'assise du siège de véhicule et donc tout risque de salissures ou de détériorations.

La tige de manoeuvre est solidaire, à sa partie antérieure, d'un bouton poussoir 29 et montée coulissante dans un guide fixe de poussoir 27 fixé sur le soubassement 2 du siège sous l'assise 5, par l'intermédiaire d'une patte 28. Un ressort 30 assure le rappel du bouton 29 et de la tige 20 vers l'avant, cette position de la tige de poussée 20 correspondant à la position de la bielle 21, de l'axe 19 et du levier 22 telle que le pion 24 se trouve à l'extrémité de l'ouverture 23 opposée à sa partie circulaire, c'est-à-dire dans la position de verrouillage d'une bielle telle que 9a ou 9b.

Lorsque la réhausse 5b est placée dans sa position relevée et reculée, de manière manuelle, les logements 25 des bielles 9a et 9b viennent s'engager en fin de course sur les pions 24 maintenus en position de verrouillage par l'intermédiaire du ressort spiral 26. On obtient ainsi un encliquetage et un verrouillage des bielles 9a et 9b sur les pions de verrouillage 24 correspondants.

La réhausse 5b est alors maintenue de façon totalement stable à sa partie antérieure par les bielles 9a et 9b bloquées dans une position sensiblement verticale.

Pour réaliser le déverrouillage des bielles, afin de remettre la réhausse dans sa position abaissée, après l'utilisation du siège par un enfant, on pousse sur le bouton 29 à l'encontre du ressort 30 depuis l'avant du siège 1, de sorte que la tige de poussée 20 provoque le basculement de la bielle 21 et le pivotement de l'axe 19 et du levier 22.

Le pivotement vers l'arrière du levier 22 entraîne le pion de verrouillage 24 vers la partie postérieure de l'ouverture 23, de forme circulaire libérant ainsi la bielle correspondante 9a ou 9b.

Le déverrouillage des deux bielles 9a et 9b est réalisé simultanément, de sorte qu'il est possible de manoeuvrer la réhausse 5b manuellement par traction vers l'avant et par poussée vers le bas.

On peut alors relâcher le bouton poussoir 29, de sorte que les ressorts 26 replacent les pions de blocage 24 en butée à l'extrémité antérieure des ouvertures 23, à l'opposé de leur partie circulaire. Le ressort 30 assure également le rappel du bouton 29 et de la tige 20 vers l'avant.

Le siège peut alors être utilisé par un adulte.

Il est à remarquer que dans la position relevée du siège, l'enfant assis sur la réhausse 5b et attaché par la ceinture de sécurité ne peut manoeuvrer le bouton de déverrouillage 29 situé à un niveau inférieur à l'assise 5.

L'enfant n'est donc pas en mesure de provoquer un déverrouillage de la réhausse.

Dans la configuration d'utilisation du siège par un adulte, les bielles 9a et 9b sont repliées à l'intérieur du soubassement 2 qui comporte des fentes telles que 2a dans ses parties latérales assurant le passage des bielles.

Aucun élément mécanique de la réhausse 5b n'est donc susceptible de détériorer le confort du siège.

Le siège est donc à la fois confortable et très sûr dans sa position d'utilisation par un enfant, d'un confort normal dans son utilisation par un adulte et d'une grande simplicité de réalisation. En outre, le siège peut être facilement manoeuvré pour passer de sa configuration d'utilisation par un adulte à sa configuration d'utilisation par un enfant et vice-versa.

L'invention ne se limite pas au mode de réalisation qui a été décrit.

C'est ainsi que la réhausse peut être montée dans l'assise d'un siège de type quelconque d'un véhicule automobile et par exemple dans l'assise de la banquette arrière du véhicule.

Le montage et la réalisation des bielles articulées de la réhausse peuvent être différents de ceux qui ont été décrits plus haut.

L'invention s'applique à des sièges pour véhicule automobile d'un type quelconque utilisés régulièrement ou occasionnellement pour le transport d'enfants.

Le véhicule automobile peut être équipé d'un ou de plusieurs sièges suivant l'invention, pour assurer le transport d'un ou de plusieurs enfants à l'intérieur du véhicule.

## Revendications

1. Siège pour véhicule automobile constitué d'une assise (5) reposant sur un soubassement (2) et d'un dossier (4) et comportant une réhausse (5b) permettant d'adapter le siège (1) pour son usage par un enfant et comprenant une garniture (8a), un support rigide (8b) monté articulé par l'intermédiaire de bielles (9a, 9b) sur le soubassement (2), et un moyen de blocage (18, 19, 20) des bielles par rapport au soubassement (2) disposé à un niveau inférieur au niveau de l'assise (5), de manière qu'on puisse déplacer manuellement la réhausse (5b) entre une position abaissée dans laquelle la réhausse (5b) constitue une partie de l'assise (5) du siège dans sa configuration d'utilisation par un adulte et une position relevée et reculée vers le dossier (4), dans laquelle la réhausse (5b) est bloquée et constitue l'assise du siège (1) dans sa configuration d'utilisation par un enfant, l'assise (5) ayant une partie fixe (5a, 6a, 6b) délimitant une cavité (7), au-dessus du soubassement (2), au moins dans la partie centrale et antérieure du siège (1), de manière à recevoir la réhausse (5b) dans sa configuration d'utilisation par un adulte, caractérisé par le fait que la réhausse (5b) est montée mobile sur le soubassement (2) par l'intermédiaire de deux bielles (9a, 9b) uniquement qui sont articulées à l'une de leurs extrémités sur le soubassement (2) et à leur autre extrémité sur le support (8b) de la réhausse (5b) autour d'un axe (12) de direction transversale situé au voisinage de l'extrémité antérieure de la rehausse (5b), entre ladite position abaissée à l'intérieur de la cavité (7) et ladite position relevée et reculée, dans laquelle la réhausse (5b) repose sur la partie fixe (5a) de l'assise, dans une position adjacente au dossier (4),
et que le moyen de blocage (18, 19, 20) des bielles (9a, 9b) est associé à un moyen (29) de commande et de déverrouillage disposé en-dessous de la partie fixe de l'assise (5) et à l'avant de l'assise (5).

2. Siège pour véhicule suivant la revendication 1, caractérisé par le fait que le moyen de blocage (18) des bielles (9a, 9b) comporte pour l'ensemble des deux bielles (9a, 9b), un axe de pivotement (19) de direction transversale par rapport au siège (1) monté rotatif dans le soubassement (2), une tige de poussée (20) pour la mise en rotation de l'axe (19) par l'intermédiaire d'un levier (21),
et, pour chacune des bielles (9a, 9b), un levier (22) solidaire à l'une de ses extrémités de l'axe (19) et portant à son autre extrémité un pion de blocage (24) introduit dans une ouverture (23) traversant un flasque (11) solidaire du soubassement (2) ainsi qu'un logement (25) dans une partie latérale de la bielle (9a, 9b) et un ressort de rappel (26) du pion (24) vers une extrémité de l'ouverture (23) en position de verrouillage d'une bielle (9a, 9b) par introduction du pion (24) dans un logement (25).

3. Siège pour véhicule selon la revendication 2, caractérisé par le fait que la tige de poussée (20) est disposée dans une direction longitudinale du siège (1) et comporte une extrémité solidaire d'un bouton de poussée (29) montée coulissante dans la direction longitudinale du siège (1) dans un guide (27) solidaire du soubassement (2) et rappelée vers l'avant du siège par un ressort de rappel (30).

4. Siège de véhicule suivant l'une quelconque des revendications 1 à 3 caractérisé par le fait qu'une dragonne (13) pour le déplacement manuel de la réhausse (5b) est fixée à l'arrière de la réhausse (5b), de manière à être accessible pour un utilisateur dans la configuration d'utilisation du siège par un adulte et dans la configuration d'utilisation du siège par un enfant.

5. Siège pour véhicule suivant l'une quelconque des revendications 1 à 4, caractérisé par le fait qu'une barre de guidage (16) d'une ceinture de sécurité du siège de véhicule est fixée sur un côté latéral de la réhausse (5b).

## Claims

1. Seat for a motor vehicle formed by a seating base (5) resting on an underframe (2) and a back (4) and comprising a lift-up section (5b) to allow the seat (1) to be adapted for use by a child, and comprising a padded panel (8a), a rigid support (8b) articulated by means of rods (9a, 9b) to the underframe (2), and a means (18, 19, 20) for locking the rods in relation to the underframe (2) disposed at a lower level to that of the seating base (5) in order to allow the lift-up section (5b) to be displaced manually between a lowered position, in which the lift-up section (5b) forms a part of the seating base (5) of the seat in its arrangement for use by an adult, and a raised position moved back towards the seat back (4), in which the lift-up section (5b) is locked to form the seating base of the seat (1) in its arrangement for use by a child, the seating frame (5) having a fixed section (5a, 6a, 6b) defining a cavity (7) above the underframe (2) at least in the central and rear section of the seat (1) in order to receive the lift-up section (5b) in its arrangement for use by an adult, characterised in that the lift-up section (5b) is movably mounted on the underframe (2) solely by means of two rods (9a, 9b), which are articulated at one of their ends to the underframe (2) and at their other end to the support (8b) of the lift-up section (5b) around a transverse axis (12) located in the vicinity of the rear end of the lift-up section (5b) between said lowered position in the interior of the cavity (7) and said raised and moved-back position, in which the lift-up section (5b) rests on the fixed section (5a) of the seating base in a position adjacent to the seat back (4); and that the means (18, 19, 20) of locking the rods (9a, 9b) is connected to an operating and unlocking means (29) located below the fixed section of the seating base (5) and at the front of the seating base (5).

2. Vehicle seat according to Claim 1, characterised in that the means (18) for locking the rods (9a, 9b), for the assembly of the two rods (9a, 9b), comprises a axis (19) for pivoting in a transverse direction in relation to the seat (1) rotatably mounted on the underframe (2), a push-rod (20) for setting the axis (19) in rotation by means of a lever (21); and, for each of the rods (9a, 9b), comprises a lever (22) integral to the axis (19) at one of its ends and at its other end a locking bar (24) inserted into an opening (23) passing through a plate (11) integral to the seating frame (2), as well as a recess (25) in a side section of the rod (9a, 9b) and a spring (26) for returning the bar (24) towards an end of the opening (23) in the locking position of a rod (9a, 9b) by inserting the bar (24) into a recess (25).

3. Vehicle seat according to Claim 2, characterised in that the push rod (20) is disposed in a longitudinal direction of the seat (1) and comprises a end integral to a push button (29) which is mounted to slide in the longitudinal direction of the seat (1) in a guide (27) integral to the underframe (2) and returned to the front of the seat by a return spring (30).

4. Vehicle seat according to any one of Claims 1 to 3, characterised in that for manual displacement of the lift-up section (5b), a tab (13) is fastened to the rear of the lift-up section (5b) so that it is accessible to a user in the arrangement of the seat for use by an adult and in the arrangement for use by a child.

5. Vehicle seat according to any one of Claims 1 to 4, characterised in that a guide bar (16) of a safety belt for the vehicle seat is secured on a side edge of the lift-up section (5b).

## Patentansprüche

1. Sitz für ein Kraftfahrzeug, der sich aus einer auf einem Sockel (2) ruhenden Sitzfläche (5) und einer Rücklehne (4) zusammensetzt und einen Aufbau (5b) zur Anpassung des Sitzes (1) an seinen Einsatz für ein Kind aufweist, der eine Einlage (8a), einen steifen Träger (8b), der mittels Kurbeln (9a, 9b) schwenkbar auf dem Sockel (2) befestigt ist, und ein Mittel zur Blockierung (18, 19, 20) der Kurbeln bezüglich des Sockels (2) aufweist, das in einer niedrigeren Höhe als die der Sitzfläche (5) derart angeordnet ist, daß der Aufbau (5b) zwischen einer abgesenkten Stellung, in der der Aufbau (5b) einen Teil der Sitzfläche (5) des Sitzes in seiner Konfiguration für die Nutzung durch einen Erwachsenen bildet, und einer erhöhten und zur Rücklehne (4) zurückgesetzten Stellung, in der der Aufbau (5b) blockiert ist und die Sitzfläche des Sitzes (1) in seiner Konfiguration für die Nutzung durch ein Kind bildet, versetzbar ist, wobei die Sitzfläche (5) einen feststehenden Bereich (5a, 6a, 6b) aufweist, der über dem Sockel (2) mindestens im zentralen und vorderen Bereich des Sitzes (1) einen Hohlraum (7) derart umschließt, daß er den Aufbau (5b) in seiner Konfiguration für die Nutzung durch einen Erwachsenen aufnimmt, **dadurch gekennzeichnet**, daß der Aufbau (5b) beweglich zwischen der abgesenkten Stellung im Inneren des Hohlraums (7) und der erhöhten und zurückgesetzten Stellung, in der der Aufbau (5b) auf dem feststehenden Bereich (5a) der Sitzfläche in einer an die Rücklehne (4) angrenzenden Lage ruht, allein mittels zweier Kurbeln (9a, 9b) auf dem Sockel (2) befestigt ist, die an einem ihrer Enden an dem Sockel (2) angelenkt sind und an ihrem anderen Ende am Träger (8b) des Aufbaus (5b) um eine Achse (12) in Querrichtung, die dem vorderen Ende des Aufbaus (5b) benachbart angeordnet ist, angelenkt sind
und daß das Mittel zur Blockierung (18, 19, 20) der Kurbeln (9a, 9b) mit einem Mittel (29) zur Steuerung und Entriegelung verbunden ist, das unterhalb des feststehenden Bereichs der Sitzfläche (5) und vor der Sitzfläche (5) angeordnet ist.

2. Sitz für ein Fahrzeug nach Anspruch 1, dadurch gekennzeichnet, daß das Mittel zur Blockierung (18) der Kurbeln (9a, 9b) für beide Kurbeln (9a, 9b) zusammen eine Schwenkachse (19) in Querrichtung bezüglich des Sitzes (1), die drehbar im Sockel (2) befestigt ist, eine Schubstange (20), um die Achse (19) mittels eines Hebels (21) in Drehung zu versetzen, und für jede der Kurbeln (9a, 9b) einen Hebel (22), der mit einem seiner Enden mit der Achse (19) verbunden ist und an seinem anderen Ende einen Blockierungszapfen (24) trägt, der in eine Öffnung (23), die in einem mit dem Sockel (2) verbundenen Flansch (11) ausgebildet ist, und auch in eine Aussparung (25) in einem seitlichen Bereich der Kurbel (9a, 9b) eingeführt ist, und eine Feder zur Rückstellung (26) des Zapfens (24) zu einem Ende der Öffnung (23) in eine Stellung aufweist, in der eine Kurbel (9a, 9b) durch die Einführung des Zapfens (24) in eine Aussparung (25) verriegelt ist.

3. Sitz für ein Fahrzeug nach Anspruch 2, dadurch gekennzeichnet, daß die Schubstange (20) in einer Längsrichtung des Sitzes (1) angeordnet ist und ein mit einem Schubknopf (29) verbundenes Ende aufweist, das in Längsrichtung des Sitzes (1) gleitend in einer mit dem Sockel (2) verbundenen Führung (27) montiert ist und durch eine Rückstellfeder (30) zur Vorderseite des Sitzes rückgestellt ist.

4. Sitz für ein Fahrzeug nach einem der Ansprüche 1 bis 3, dadurch gekennzeichnet, daß eine Schlaufe (13) zur manuellen Versetzung des Aufbaus (5b) an der Rückseite des Aufbaus (5b) derart befestigt ist, daß sie für einen Benutzer in der Konfiguration für die Nutzung des Sitzes durch einen Erwachsenen und in der Konfiguration für die Nutzung des Sitzes durch ein Kind zugänglich ist.

5. Sitz für ein Fahrzeug nach einem der Ansprüche 1 bis 4, dadurch gekennzeichnet, daß ein Führungsstab (16) eines Sicherheitsgurtes des Sitzes des Fahrzeugs an einer seitlichen Fläche des Aufbaus (5b) befestigt ist.
